# DEMANDE DE BREVET EUROPEEN

(11) **EP 1 083 510 A1**
(43) Date de publication de la demande: **14.03.2001**
(21) Numéro de dépôt: 00402482.4
(22) Date de dépôt: 08.09.2000
(51) Int. Cl.: G06F 17/60

(54) **Système d'aide à la sélection de produits financiers par un individu.**

(30) Priorité: 09.09.1999 FR 9911305
(71) Demandeur: Banque Cortal, 75116 Paris (FR)
(72) Inventeur: Thibaut, Cécile, 94130 Nogent sur Marne (FR); Trecco, René, 92190 Meudon (FR)
(74) Mandataire: Jacobson, Claude

(57) **Abrégé**

Ce système d'aide à la sélection de produits financiers par un individu, est caractérisé en ce qu'il comporte des moyens (4,5,7,8,9,10) d'acquisition d'informations relatives aux souhaits d'investissement financier de l'individu pour en tirer des informations de profil d'investisseur de celui-ci, une base de données générique (1) dans laquelle sont stockées des informations (2) relatives à des produits financiers associées à des informations prédéterminées (3) de profil d'investisseur correspondant, des moyens (4,5,6) de sélection par l'individu d'au moins un produit financier dans la base, et des moyens (13) de comparaison des informations prédéterminées de profil d'investisseur correspondant à ce produit sélectionné par l'individu aux informations de profil d'investisseur de celui-ci, pour en déterminer des informations de correspondance ou de discordance entre ces informations de profils.

## Description

La présente invention concerne un système d'aide à la sélection de produits financiers par un individu.

Les organismes financiers sans guichet, c'est-à-dire accessibles par exemple à partir d'un terminal d'ordinateur et d'un réseau de communication, rencontrent de plus en plus de succès auprès du public pour diverses raisons.

Cependant, les systèmes de traitement d'informations mis en oeuvre actuellement par ces organismes et les organismes financiers classiques sont relativement rudimentaires au niveau de leurs fonctionnalités tout en étant relativement complexes au niveau de leur utilisation.

De plus, la variété et le nombre de produits financiers proposés sont tels qu'il devient de plus en plus difficile de trouver parmi l'ensemble des produits financiers celui ou ceux qui sont le plus adaptés à chaque individu.

Il peut alors en résulter pour un individu des erreurs dans la sélection des produits, sans que l'organisme ne s'en rende compte.

Le but de l'invention est donc de résoudre ces problèmes.

A cet effet, l'invention a pour objet un système d'aide à la sélection de produits financiers par un individu, caractérisé en ce qu'il comporte :
- des moyens d'acquisition d'informations relatives aux souhaits d'investissement financier de l'individu pour en tirer des informations de profil d'investisseur de celui-ci,
- une base de données générique dans laquelle sont stockées des informations relatives à des produits financiers associées à des informations prédéterminées de profil d'investisseur correspondant,
- des moyens de sélection par l'individu d'au moins un produit financier dans la base, et
- des moyens de comparaison des informations prédéterminées de profil d'investisseur correspondant à ce produit sélectionné par l'individu aux informations de profil d'investisseur de celui-ci, pour en déterminer des informations de correspondance ou de discordance entre ces informations de profils.

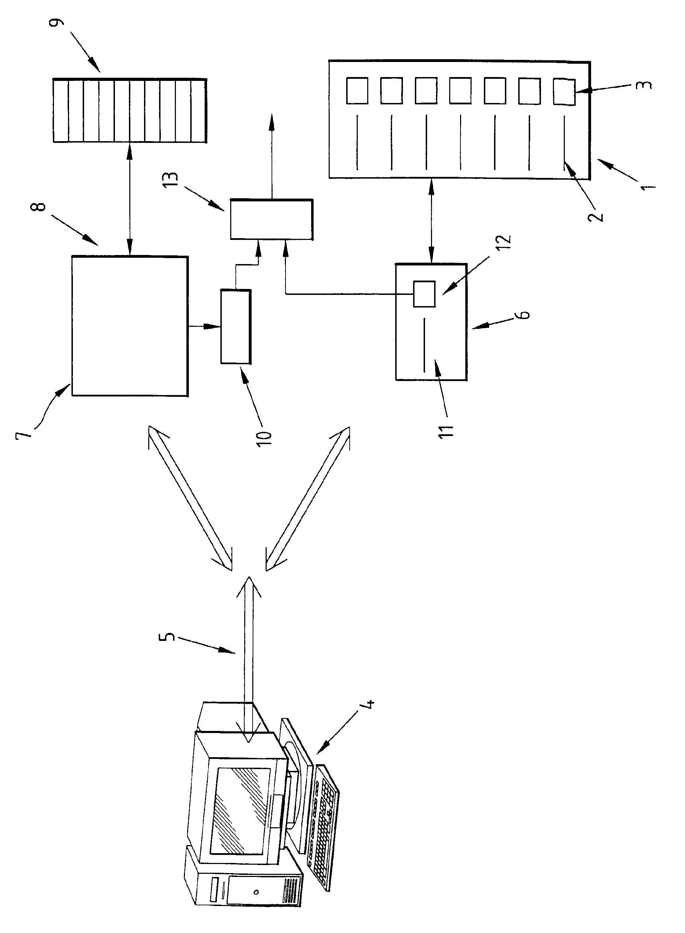

L'invention sera mieux comprise à la lecture de la description qui va suivre, donnée uniquement à titre d'exemple et faite en se référant au dessin annexé qui représente un schéma synoptique illustrant la structure et le fonctionnement d'un système d'aide selon l'invention.

On a en effet représenté sur cette figure, un système d'aide à la sélection de produits financiers par un individu, qui comporte une base de données générique désignée par la référence générale 1, dans laquelle sont stockées des informations relatives à des produits financiers proposés au public, par exemple par un organisme financier.

Cette base de données générique comporte donc des informations 2 relatives aux produits financiers, comme par exemple leur désignation, etc..., ces informations étant associées à des informations prédéterminées de profil d'investisseur correspondant, désignées par la référence générale 3.

Ces informations correspondent par exemple au degré de risque en terme d'investissement associé à chaque produit.

Cette base de données est accessible par exemple à un individu grâce à un terminal d'ordinateur désigné par la référence générale 4, et un réseau de communication d'informations, désigné par la référence générale 5.

Bien entendu, d'autres moyens d'accès peuvent être envisagés.

L'accès par l'individu à cette base se fait alors à travers une interface de sélection de produits 6.

De plus, le système d'aide selon l'invention comporte des moyens d'acquisition d'informations relatives aux souhaits d'investissement financier de l'individu pour en tirer des informations de profil d'investisseur de celui-ci.

Ces moyens sont désignés par la référence générale 7 sur cette figure et comportent des moyens de traitement d'informations désignés par la référence générale 8 qui, à partir d'informations acquises de la part de l'individu, assurent le classement de celui-ci selon un profil d'investisseur choisi parmi plusieurs profils préétablis possibles et stockés en 9.

Le profil d'investisseur de l'individu est alors déterminé en 10 par exemple à partir de réponses fournies à un questionnaire établi au préalable et qui permet de classer celui-ci selon l'un des profils préétablis et stockés en 9.

Ces informations de profil d'investisseur de l'individu peuvent alors être comparées aux informations prédéterminées de profil d'investisseur correspondant à un produit sélectionné par l'individu dans la base, comme le produit désigné par la référence générale 11 sur cette figure.

Ce produit sélectionné par l'individu dans la base de données est en effet associé à des informations 12 de profil d'investisseur correspondant et ces informations de profil d'investisseur correspondant peuvent alors être comparées dans des moyens de comparaison 13 aux informations de profil d'investisseur de l'individu tel qu'établi en 10, pour déterminer des informations de concordance ou de discordance entre ces informations de profils.

Ces informations de concordance ou de discordance peuvent alors être délivrées à l'individu ou à l'organisme financier mettant en oeuvre ce système pour confirmer la sélection réalisée par l'individu ou au contraire attirer son attention sur le fait que le produit qu'il a sélectionné dans la base de données ne correspond pas à son profil d'investisseur tel qu'il a été établi.

C'est ainsi par exemple que si le profil d'investisseur d'un individu a été déterminé comme étant un profil d'investisseur privilégiant la sécurité de ses placements financiers, il peut être intéressant d'attirer son attention sur le fait que le produit qu'il vient de sélectionner dans la base de données générique, est un produit à risque.

L'individu peut alors être amené à valider ou infirmer son choix et/ou à demander des informations complémentaires sur sa sélection.

Bien entendu, différents profils d'investisseurs peuvent ainsi être préétablis en prenant en compte les différentes caractéristiques des produits financiers qui peuvent être proposés au public (risque, origine, type, etc..).

Les informations de profil d'investisseur d'un individu peuvent bien entendu être stockées pour des accès ultérieurs à la base de données.

Les informations de profil d'investisseur correspondant aux produits financiers peuvent être stockées dans un répertoire différent de la base de données générique et être accessibles, soit directement, soit indirectement à travers par exemple, de portefeuilles préétablis de produits correspondants.

## Revendications

1. Système d'aide à la sélection de produits financiers par un individu, caractérisé en ce qu'il comporte :
- des moyens (4,5,7,8,9,10) d'acquisition d'informations relatives aux souhaits d'investissement financier de l'individu pour en tirer des informations de profil d'investisseur de celui-ci,
- une base de données générique (1) dans laquelle sont stockées des informations (2) relatives à des produits financiers associées à des informations prédéterminées (3) de profil d'investisseur correspondant,
- des moyens (4,5,6) de sélection par l'individu d'au moins un produit financier dans la base (1), et
- des moyens (13) de comparaison des informations prédéterminées de profil d'investisseur correspondant à ce produit sélectionné par l'individu aux informations de profil d'investisseur de celui-ci, pour en déterminer des informations de correspondance ou de discordance entre ces informations de profils.

2. Système selon la revendication 1, caractérisé en ce que les moyens d'acquisition d'informations et les moyens de sélection comprennent un terminal d'ordinateur (4) raccordé au reste du système par un réseau de transmission d'informations (5).
